# EUROPÄISCHE PATENTSCHRIFT

(11) **EP 1 852 300 B1**
(45) Veröffentlichungstag und Bekanntmachung des Hinweises auf die Patenterteilung: **19.12.2012**
(21) Anmeldenummer: 07004761.8
(22) Anmeldetag: 08.03.2007
(51) Int. Cl.: B60N 2/28

(54) **Kindersitz**
Child car seat
Siège enfant

(30) Priorität: 10.03.2006 DE 102006011520
(43) Veröffentlichungstag der Anmeldung: 07.11.2007
(73) Patentinhaber: RECARO Child Safety GmbH & Co. KG, 95352 Marktleugast (DE)
(72) Erfinder: Nüssel, Michael, 95447 Bayreuth (DE); Hoffmann, Hans-Peter, 75031 Eppingen (DE); Pöhner, Jens, 95346 Stadtsteinach (DE)
(74) Vertreter: Daub, Thomas

(56) Entgegenhaltungen:
- EP-A- 0 970 842
- EP-A- 1 344 679
- EP-A- 1 586 483
- WO-A1-2005/123447
- US-A1- 2003 209 926

## Beschreibung

Die Erfindung richtet sich auf einen Kindersitz zum Transport eines Kindes in einem Fahrzeug vorzugsweise in aufrecht sitzender Position, wobei vorzugsweise die Lehne des Kindersitzes an dem Rückenpolster des fahrzeugeigenen Sitzes anliegt, mit einer Einrichtung zur Festlegung des Kindersitzes an dafür vorgesehenen Rastbügeln, welche sich zwischen der Lehne und der Sitzfläche eines fahrzeugeigenen Sitzes befinden und mit der Struktur des betreffenden Fahrzeugs verbunden sind, insbesondere gemäß dem sog. ISOFIX-System.

Das sog. ISOFIX-System ist eine genormte Steckverbindung zur festen Fixierung eines Kindersitzes in einem Personenkraftfahrzeug. Zu diesem Zweck sind an der Karosserie bzw. dem Chassis des Kraftfahrzeugs pro Fahrzeugsitz - zumeist nur für die hinteren Sitze, manchmal auch für den Beifahrersitz - jeweils zwei Rastbügel fixiert, bspw. angeschweißt oder -geschraubt. Sie erstrecken sich in den Spalt zwischen Sitzpolster und Rückenlehne des Fahrzeugsitzes und sind daher von der Sitzvorderseite aus erreichbar. An den daran befestigbaren Kindersitzen befinden sich als Pendants dazu Schnappverschlüsse, welche in der Lage sind, diese Rastbügel formschlüssig zu umgreifen. Dadurch wird eine Translationsbewegung eines solchermaßen festgelegten Kindersitzes bei einer starken Verzögerung des Fahrzeugs, bspw. bei einem Aufprall, vermieden. Allerdings verfügen Kindersitze für den Transport von Kindern in aufrechter Sitzposition meist über ein eigenes Gurtsystem, und erfahren deshalb bei einer plötzlichen Verzögerung, bspw. bei einem Aufprall, hohe Verzögerungskräfte. Diese wirken vor allem im Bereich des Schwerpunktes eines in dem Kindersitz befindlichen Kindes, der deutlich oberhalb der fahrzeugseitigen ISOFIX-Verankerungen liegt. Im Gegensatz zu einem mittels fahrzeugeigenen Gurten festgelegten Kindersitzes müssen diese Kräfte von der Struktur des Kindersitzes aufgenommen und zu dessen ISOFIX-Anschlüssen geleitet werden. Aus diesen Gründen hat man bislang versucht, ISOFIX-Anschlüsse an einem Kindersitz starr zu verbinden, um in diese Kraftübertragungskette kein schwaches Glied einzufügen. Eine solche starre Verbindung führt allerdings dazu, dass ein solcher Kindersitz nicht in einem Fahrzeug ohne ISOFIX-Rastbügel eingesetzt werden sollte, da sich die ISOFIX-Anschlüsse solchenfalls unkontrolliert in die Polsterung eindrücken und diese beschädigen können. Ein solcher ISOFIX-Kindersitz sollte daher nicht in ein anderes Fahrzeug eingebaut werden, selbst wenn bspw. während einer längeren Reparaturzeit od. dgl. ein Ersatzfahrzeug zur Verfügung steht, etc.

Aus diesen Nachteilen des beschriebenen Standes der Technik resultiert das die Erfindung initiierende Problem, einen gattungsgemäßen Kindersitz derart weiterzubilden, dass er auch in einem Fahrzeug ohne ISOFIX-Rastbügel verwendbar ist.

Die Lösung dieses Problems gelingt dadurch, dass die Einrichtung zur Festlegung des Kindersitzes an den Rastbügeln eines Fahrzeugs von dem Kindersitz lösbar ist.

Durch diese Maßnahme läßt sich die an dem Kindersitz hervorstehende und daher bei einem normalen Fahrzeug ohne ISOFIX-Rastbügel eher störende ISOFIX-Schnappmechanik entfernen, falls diese nicht benötigt wird; der betreffende Kindersitz wird dadurch zu einem herkömmlichen Kindersitz, der in jedem Fahrzeug einsetzbar ist. Der Kindersitz ist daher auch beim Neuerwerb eines anderen Fahrzeugs immer übertragbar, unabhängig von einer vorhandenen oder nicht vorhandenen ISOFIX-Ausrüstung.

Erfindungsgemäß weist die Einrichtung zur Festlegung des Kindersitzes an Rastbügeln eines Fahrzeugs wenigstens zwei gegeneinander verstellbare Rahmenteile auf. Dadurch ist eine Anpassung an unterschiedliche Fahrzeugtypen möglich, weil diese sich hinsichtlich der Sitzfläche, Polsterung, etc. oftmals erheblich voneinander unterscheiden. Stets sollte jedoch die Rückenlehne eines Kindersitzes fest gegen das Rückenpolster des fahrzeugeigenen Sitzes gepresst werden, damit der Kindersitz bei Beschleunigungs- oder Verzögerungsvorgängen keine Nickbewegung ausführt.

Der Kindersitz dahingehend weitergebildet, dass sich an einem Rahmenteil ein oder mehrere Elemente zum Anschluß an den Rastbügeln eines Fahrzeugs (fahrzeugfestes Rahmenteil), befinden, während an dem anderen ein oder mehrere Elemente zum Anschluß an den Kindersitz vorgesehen sind (kindersitzfestes Rahmenteil). Eine solche Mechanik ist in der Lage, die unterschiedlichen Abstände zwischen Polstervorderseite und ISOFIX-Rastbügeln bei unterschiedlichen Fahrzeugtypen auszugleichen.

Bevorzugt verfügt die Einrichtung zur Festlegung des Kindersitzes an dafür vorgesehenen Rastbügeln eines Fahrzeugs, insbesondere der fahrzeugfeste Rahmenteil desselben, d.h. derjenige Teil des Kindersitzes, der bei Entnahme des Kindersitzes im Fahrzeug verbleiben kann, über zwei oder mehr Rastarme, an deren freien Enden sich je ein quer zur Fahrtrichtung verlaufender Schlitz befindet, in dem je ein hakenförmiges Element verstellbar angeordnet ist. Ein solches hakenförmiges Element hat die Aufgabe, im fixierten Zustand in Zusammenwirken mit den Schlitzrändern einen fahrzeugeigenen ISOFIX-Rastbügel formschlüssig zu umgreifen.

Es liegt im Rahmen der Erfindung, dass das/die hakenförmige(n) Element(e) mit einem Schnappmechanismus versehen ist/sind, der beim Einführen eines fahrzeugeigenen Rastbügels in einen Schlitz eines Rastarms das dortige, hakenförmige Element in eine Schließstellung bewegt und dort arretiert. Dadurch ist eine aktive Arretierung, bspw. durch Umlegen eines Hebels od. dgl., nicht mehr erforderlich; vielmehr wird beim vollständigen Einführen eines Rastbügels ein vorgespannter Schnappmechanismus ausgelöst, der dann die selbsttätige Arretierung bewirkt.

Um den Schnappmechanismus des/der hakenförmigen Elements (-e) in eine gelöste, aber vorgespannte Stellung zu bringen, ist (je) ein Bowdenzug vorgesehen. Dieser ist mit einem Ende an der Schnappmechanik angeschlossen und mit seinem anderen Ende mit einem Element zur manuellen Betätigung verbunden. Ein Bowdenzug bietet die Möglichkeit, das Betätigungselement räumlich nahezu beliebig plazieren zu können, bspw. an der den Rastarmen abgewandten, auch in eingebautem Zustand leicht zugänglichen Seite des Kindersitzes, allerdings außerhalb der Reichweite des Kindes, bspw. im Bereich unterhalb der Sitzfläche.

Der Abstand der freien Enden der Rastarme von bzw. gegenüber der Sitzfläche des Kindersitzes sollte verstellbar sein, um die oben erwähnte Anpassung an unterschiedliche Fahrzeugtypen zu erlauben. Dabei genügt im Normalfall eine gleichmäßige Verstellbarkeit beider bzw. mehrerer Rastarme, da die Geometrie eines fahrzeugeigenen Sitzes wie auch eines erfindungsgemäßen Kindersitzes meist symmetrisch zu einer vertikalen Mittelebene ist.

Aus diesem Grund empfiehlt die Erfindung, dass das fahrzeugfeste Rahmenteil eine etwa U-förmige Struktur aufweist, deren beiden Seitenschenkel den Rastarmen entsprechen. Die beiden Rastarme bilden demnach jeweils einen Bestandteil einer in sich symmetrischen Rahmenstruktur und werden daher bei deren Verstellung synchron verfahren.

Diese Verstellung wird dadurch ermöglicht, dass das fahrzeugfeste Rahmenteil in oder an dem kindersitzfesten Rahmenteil geführt ist. Beide Rahmenteile liegen vorzugsweise in einer (gemeinsamen) Ebene, die vorzugsweise etwa parallel zu der Sitzfläche des Kindersitzes ist. Deshalb sind sie für eine gegenseitige Linearführung gut geeignet.

Um aneinander geführt werden zu können, sollte das kindersitzfeste Rahmenteil ebenfalls eine etwa U-förmige Struktur aufweisen, ggf. mit einer oder mehreren, zusätzlichen Querstreben, bspw. zur Versteifung desselben.

Die Linearführung selbst läßt sich dadurch bewerkstelligen, dass die Seitenschenkel der U-förmigen Struktur des kindersitzfesten Rahmenteils jeweils einen U-förmigen Querschnitt aufweisen, in welchem je ein Seitenschenkel des fahrzeugfesten Rahmenteils geführt ist. Bspw. können die Seitenschenkel des kindersitzfesten, U-förmigen Rahmenteils an ihren einander zugewandten Innenseiten je eine etwa nutförmige Führungsvertiefung aufweisen, in welche das fahrzeugfeste Rahmenteil, insbesondere dessen Seitenschenkel, einschiebbar ist.

Um eine definierte Verstellung und gegenseitige Arretierung der beiden Rahmenteile zu bewirken, ist erfindungsgemäß zwischen dem fahrzeugfesten und dem kindersitzfesten Rahmenteil eine Verstellmechanik mit einem Rastmechanismus vorgesehen sein. Eine gerasterte Verstellung, bspw. in Schritten von jeweils 0,5 cm bis 1,5 cm, erscheint völlig ausreichend, da beim Anpressen des Kindersitzes an das Rückenpolster eines fahrzeugeigenen Sitzes letzteres in größerem Umfang zurückweichen kann.

Die Erfindung zeichnet sich weiterhin aus durch ein manuell betätigbares Element zum Lösen der Rastmechanik. Damit kann ein erfindungsgemäßer Kindersitz nach dessen Ausbau in eine neutrale Ausgangsposition für den Einbau in ein anderes Fahrzeug verbracht werden.

Vorzugsweise ist der kindersitzfeste Rahmenteil mit der Unterseite des Kindersitzes verbindbar ausgebildet. Aufgrund seiner Lage in einer gemeinsamen Ebene mit dem fahrzeugeigenen Rahmenteil erstreckt sich der kindersitzfeste Rahmenteil überwiegend etwa horizontal. An der Unterseite des Kindersitzes findet er eine große dazu etwa parallele Fläche, um gerade auch gegenüber Drehmomenten ausreichend fest verankert werden zu können.

Diesem Erfindungsgedanken folgend ist weiterhin vorgesehen, dass der kindersitzfeste Rahmenteil an wenigstens drei, vorzugsweise vier Punkten formschlüssig mit der Sitzunterseite verbindbar ist. Diese verschiedenen Vebindungspunkte sind voneinander beabstandet, vorzugsweise in horizontaler Richtung, bspw. um jeweils 20 bis 50 cm, insbesondere um jeweils 25 bis 45 cm. Jeweils wenigstens zwei derartige Verbindungspunkte können in Fahrtrichtung hintereinander angeordnet sein, so dass jegliche Kipptendenz zwischen Kindersitz und daran festgelegtem Rahmenteil unterbunden ist.

Bevorzugt liegen vier Verbindungspunkte an den Ecken eines (gedachten) Rechtecks, so dass der Kindersitz in Fahrtrichtung als auch entgegen der Fahrtrichtung mit der Einrichtung zum Festlegen an fahrzeugeigenen Rastbügeln verbindbar ist. Ein solches Rechteck kann bspw. eine Länge (in Fahrtrichtung gemessen) zwischen 40 cm und 50 cm aufweisen, und eine Breite (quer zur Fahrtrichtung) von 25 cm bis 35 cm. Dies wird außerdem dadurch ermöglicht, dass die Vebindungselemente entweder an dem Kindersitz oder an der ISOFIX-Einrichtung, insbesondere an deren kindersitzfestem Rahmenteil, symmetrisch zu einer quer zur Fahrtrichtung verlaufenden, vertikalen Ebene gestaltet sind. Ein 180° um eine vertikale Achse gedrehter Kindersitz findet daher wieder exakt passende Verbindungspunkte vor. Dadurch kann ein erfindungsgemäßer Kindersitz - bspw. in Schweden, wo dies gesetzlich vorgeschrieben ist - mit geringem Aufwand entgegen der Fahrtrichtung gedreht werden. Allerdings sieht die Erfindung zu diesem Zweck noch einen zusätzlichen Adapter vor, der weiter unten erläutert wird.

Ein - vorzugsweise symmetrisches - Verbindungselement an der Sitzunterseite oder an einem an dieser festlegbaren Element bzw. Adapter ist erfindungsgemäß als quer zur Fahrtrichtung verlaufendes, vorzugsweise stabförmiges Element ausgebildet. Indem ein solches stabförmiges Element in einer Ebene umgriffen wird, welche von seiner Längsrichtung etwa lotrecht durchstoßen wird, werden Beschleunigungs- oder Verzögerungskräfte in bzw. entgegen der Fahrtrichtung spielfrei übertragen. Einem seitlichen Verrutschen wird bspw. durch endseitige Anschlagflächen oder -elemente entgegengewirkt.

Als Pendant zu derartigen, stabförmigen Verankerungselementen an der Sitzunterseite sind an dem kindersitzfesten Rahmenteil erfindungsgemäß mehrere hakenförmige Elemente vorgesehen, welche je eines der stabförmigen Elemente an der Sitzunterseite umgreifen. Diese werden dabei unterstützt durch zusätzliche Führungsflächen, so dass ein Lösevorgang nur in einer ganz bestimmten Richtung möglich ist, die während der Benutzung jedoch anderweitig blockiert ist.

Erfindungsgemäß sind ein oder mehrere, vorzugsweise zwei hakenförmige Elemente starr mit dem feststehenden Rahmenteil verbunden. Diese bilden zusammen mit je einer der Hakeninnenseite gegenüber liegenden Führungsfläche einen geraden oder L-förmig verlaufenden Schlitz, so dass eine Lösebewegung nur entgegen der - ggf. winklig verlaufenden - Längsachse eines solchen Schlitzes möglich ist. Dabei kann die Anordnung derart getroffen sein, dass die Längsachse eines L-förmig verlaufenden Schlitzes zu den freien Enden der Rastarme bzw. zu dem Rückenpolster des betreffenden Fahrzeugsitzes hin umgebogen ist, so dass die Verbindung bei fest gegen das Fahrzeugpolster gepreßtem Kindersitz ohne vorherige Demontage des Kindersitzes nicht lösbar ist.

Wenn die Nase(n) des/der starren, hakenförmigen Elements (-e) länger ausgebildet ist/sind als der Durchmesser eines zu umgreifenden, stabförmigen Elements, so ergibt sich ein zuverlässiger Formschluß, der auch großen Kräften standhält.

Derartige starre, hakenförmige Elemente sollten nahe oder an derjenigen Seite des feststehenden bzw. kindersitzfesten Rahmens vorgesehen sein, an der sich auch die Rastarme befinden. Gerade bei einer starken Verzögerung erfährt ein Kindersitz starke, nach vorne gerichtete Kräfte, und dabei könnte er um die vorderen Verbindungspunkte kippen, wenn die hinteren Verbindungshaken den Kindersitz nicht zuverlässig festhalten. Deshalb sind die in Fahrtrichtung gesehen hinteren Verbindungshaken stabiler auszuführen als die vorderen.

Andererseits sollten ein oder mehrere, vorzugsweise zwei hakenförmige Elemente verschwenkbar mit dem feststehenden bzw. kindersitzfesten Rahmenteil verbunden sein. Dank ihrer Beweglichkeit erlauben diese Verbindungshaken das Einsetzen des Kindersitzes, indem sie dazu vorübergehend nachgeben.

Die Nase(n) des/der verschwenkbaren, hakenförmigen Elements (-e) kann/können kürzer sein als die Nase(n) des/der starren, hakenförmigen Elements (-e). Denn das/die verschwenkbaren, hakenförmigen Elements (-e) sitzt (-en) vorzugsweise an der in Fahrtrichtung gesehen vorderen Seite des Kindersitzes, wo naturgemäß kaum Lösekräfte auftreten: Einerseits drückt die statische Gewichtskraft des Kindersitzes nach unten, zu dieser Kraft addieren sich bei einer Verzögerung des Fahrzeugs noch die Schubkräfte des Kindersitzes, und bei einem - naturgemäß weniger abrupten - Beschleunigen des Fahrzeugs sorgt das Polster der Rückenlehne des fahrzeugeigenen Sitzes für einen festen Stand des Kindersitzes auf dem Fahrzeugsitz ohne jegliche Nickbewegung.

Das/die verschwenkbare(n), hakenförmige(n) Element(e) wird/werden durch (je) eine Feder in die Schließstellung gedrückt oder gezogen, in der es/sie je ein stabförmiges Element umgreift (-en).

Um sie dagegen in eine Öffnungsstellung zu bewegen, in der es/sie das betreffende, stabförmige Element nicht umgreifen, ist/sind das/die verschwenkbare(n), hakenförmige(n) Element(e) mit einem Element zur manuellen Betätigung gekoppelt. Es kann sich hierbei bspw. um einen Handgriff eines doppelarmigen Hebels handeln.

Alle Betätigungselemente sollten sich an der den Rastmechanismen abgewandten Vorderseite des kindersitzfesten Rahmenteils befinden. Dort sind sie jederzeit zugänglich - gerade auch in eingebautem Zustand des Kindersitzes. Daher bleibt es dem Anwender überlassen, ob er für eine vorübergehende Demontage den gesamten Kindersitz von den fahrzeugeigenen ISOFIX-Rastbügeln löst, oder statt dessen - nach vorheriger Freigabe und Streckung der Rastarme - nur das eigentliche Kindersitzteil von dessen unterseitiger Fixiereinheit.

Um eine Nickbewegung des Kindersitzes bei einer plötzlichen Verzögerung vollständig auszuschließen, kann an dem kindersitzfesten Rahmenteil eine Bodenstütze angeordnet sein. Diese erstreckt sich knapp vor der Vorderkante des betreffenden Fahrzeugsitzes nach unten und stützt sich auf dem Boden bzw. Chassis des Fahrzeugs ab. Dadurch ist jedwede Neigung des Kindersitzes um eine quer zur Fahrtrichtung verlaufende Achse nach vorne ausgeschlossen.

Um die Bodenstütze an jedes Fahrzeug unabhängig von dessen Sitzhöhe optimal anpassen zu können, sollte ihre Länge verstellbar sein, bspw. teleskopisch ausziehbar und mittels einer Klemmschraube oder durch quer hindurch gesteckte Stifte oder Splinte arretierbar.

Weitere Vorteile ergeben sich dadurch, dass die Einrichtung zur Festlegung des Kindersitzes an den Rastbügeln eines Fahrzeugs von einem Gehäuse umgeben ist. Dadurch wird einerseits die Mechanik vor dem Eindringen von Fremdkörpern geschützt, andererseits der Anwender vor Verletzungen, bspw. Quetschungen. Auch wird Schmierfett od. dgl. von den Polstern eines Fahrzeugs ferngehalten.

Vorzugsweise ist das Gehäuse an dem kindersitzfesten Rahmenteil fixiert. Demzufolge verändert sich die Relativlage zwischen dem Kindersitz bzw. dessen Außenschale einerseits und dem die Einrichtung zur Festlegung des Kindersitzes an den Rastbügeln eines Fahrzeugs umgebenden Gehäuse andererseits nicht. Die beiden Gehäuseteile können daher aufeinander abgestimmt sein und sich gegenseitig ergänzen, fortsetzen oder umgreifen, so dass sich eine Konstruktion mit einer hochgradigen Ästhetik ergibt.

Seitenwangen an der Oberseite des Gehäuses, welche vorzugsweise in Fahrtrichtung verlaufen, sind in der Lage, die Verbindungspunkte vor mechanischen Einflüssen zu schützen.

Es liegt im Rahmen der Erfindung, dass ein oder mehrere, stabförmige Elemente lösbar an der Unterseite eines Kindersitzes fixiert oder fixierbar sind. Dadurch können die Verbindungselemente für unterschiedliche Konfigurationen an verschiedenen Positionen festgelegt werden, bspw. in Abhängigkeit von der Orientierung der Sitzrichtung gegenüber der Fahrtrichtung.

Diesem Erfindungsaspekt folgend, können jeweils mehrere, insbesondere zwei oder vier stabförmige Elemente an einem gemeinsamen Träger angeordnet sein, der an der Sitzunterseite fixiert oder fixierbar ist, insbesondere anschraubbar. Solchenfalls reduziert sich der Aufwand für die Montage oder Demontage der Verbindungselemente an der Unterseite des Kindersitzes.

In Verfolgung dieses Erfindungsgedankens ist weiterhin vorgesehen, dass ein mehrere, stabförmige Elemente aufweisender Träger einen in Längsrichtung des Sitzes über den Kindersitz überstehenden Bügel aufweist. Dieser Bügel steht - bei Orientierung des Kindersitzes entgegen der Fahrtrichtung - über die freie Sitzflächenkante des Kindersitzes über und liegt an dem Rückenlehnenpolster des fahrzeugeigenen Sitzes an. Dadurch wird ein Abstand zwischen der freien Sitzflächenkante des Kindersitzes und der Rückenlehne des Autositzes geschaffen, in dem ein Kind seine Füße plazieren kann, wenn es entgegen der Fahrtrichtung sitzt. Vorzugsweise kann ein solcher Bügel auch deutlich über die Bodenseite des Kindersitzes nach unten überstehen, so dass der Kindersitz eine Neigung erfährt, die dem Kind ein bequemes Sitzen ermöglicht.

Um solche Verbindungselemente auch im Hinblick auf große Kräfte sicher an der Unterseite des Kindersitzes zu verankern, ist vorgesehen, dass die Schrauben zur Fixierung derartiger Verbindungselemente an der Unterseite des Kindersitzes eine (äußere) Sitzschale des Kindersitzes durchdringen sowie eine auf deren Oberseite aufgesetzte Platte, die vorzugsweise aus Metall besteht. Damit werden die ggf. beträchtlichen Kräfte im Falle einer plötzlichen Verzögerung großflächig auf den Korpus des Kindersitzes verteilt.

Weitere Vorteile lassen sich erzielen, indem der Kindersitz an seiner Unterseite seitliche Schürzen aufweist, welche die Einrichtung zur Festlegung des Kindersitzes an den Rastbügeln eines Fahrzeugs, insbesondere deren Gehäuse, seitlich umgreifen. Dadurch ergibt sich ein zusätzlicher Seitenhalt; außerdem kann ein zwischen diesen Schürzen verbleibender Zwischenraum optimal genutzt werden, so dass ein erfindungsgemäßer Kindersitz trotz der lösbaren Einrichtung zur Festlegung an fahrzeugeigenen ISOFIX-Verankerungen an seiner Unterseite kaum höher ist als ein herkömmlicher Kindersitz.

Eine Einrichtung am Kindersitz zum Festklemmen desselben an einem fahrzeugeigenen Gurt erlaubt es dem erfindungsgemäßen Kindersitz, auch in Fahrzeugen ohne Rastbügel verwendet zu werden. Dies ist besonders vorteilhaft beim Neukauf eines Fahrzeugs, weil solchenfalls auch Fahrzeuge ohne ISOFIX-Verankerungen in Betracht kommen, ohne dass dann ein neuer Kindersitz anzuschaffen ist.

Bei Fahrzeugen ohne Rastbügel ist der erfindungsgemäße Kindersitz ohne die Einrichtung zur Festlegung des Kindersitzes an solchen Rastbügeln verwendbar; als Aufstandsflächen dienen sodann die seitlichen Schürzen an der Unterseite des Kindersitzes, so dass nach wie vor eine optimale Kippsicherheit gegeben ist.

Schließlich entspricht es der Lehre der Erfindung, dass die von dem Kindersitz gelöste Einrichtung zur Festlegung von konstruktiv verschiedenen Kindersitzen und/oder von Babyschalen an fahrzeugeigenen Rastbügeln verwendbar ist. Dadurch kann eine solche Einrichtung ein Kind auf dessen Lebensweg so lange begleiten, bis ein Kindersitz nicht mehr erforderlich ist. Die aufwendige Mechanik muß dabei nur einmal angeschafft werden, so dass sich für den Anwender eine günstige Kostenstruktur ergibt.

Weitere, Merkmale, Eigenschaften, Vorteile und Wirkungen auf der Basis der Erfindung ergeben sich aus der folgenden Beschreibung einer bevorzugten Ausführungsform der Erfindung sowie anhand der beigefügten Zeichnung. Hierbei zeigt:
- Fig. 1: einen erfindungsgemäßen Kindersitz mit einer Einrichtung zur Festlegung an fahrzeugeigenen Rastbügeln in einer perspektivischen Darstellung;
- Fig. 2: die Einrichtung des Kindersitzes aus Fig. 1 zur Festlegung an fahrzeugeigenen Rastbügeln, ebenfalls in einer perspektivischen Darstellung;
- Fig. 3: die Einrichtung aus Fig. 2 zur Festlegung des Kindersitzes aus Fig. 1 an fahrzeugeigenen Rastbügeln, ohne Gehäuse sowie aus einer der Fig. 2 entsprechenden Perspektive, mit einem an der Unterseite des Kindersitzes aus Fig. 1 fixierbaren Verbindungsträger;
- Fig.4: eine Draufsicht auf die Fig. 3, ohne den dort abgebildeten Verbindungsträger;
- Fig. 5: eine perspektivische Ansicht auf die Außenschale des Kindersitzes aus Fig. 1, bei hochgeschwenkter Innenschale; sowie
- Fig. 6: eine Ansicht auf die Unterseite des Kindersitzes aus Fig. 1, mit verschiedenen, daran angebauten Verbindungsträgern.

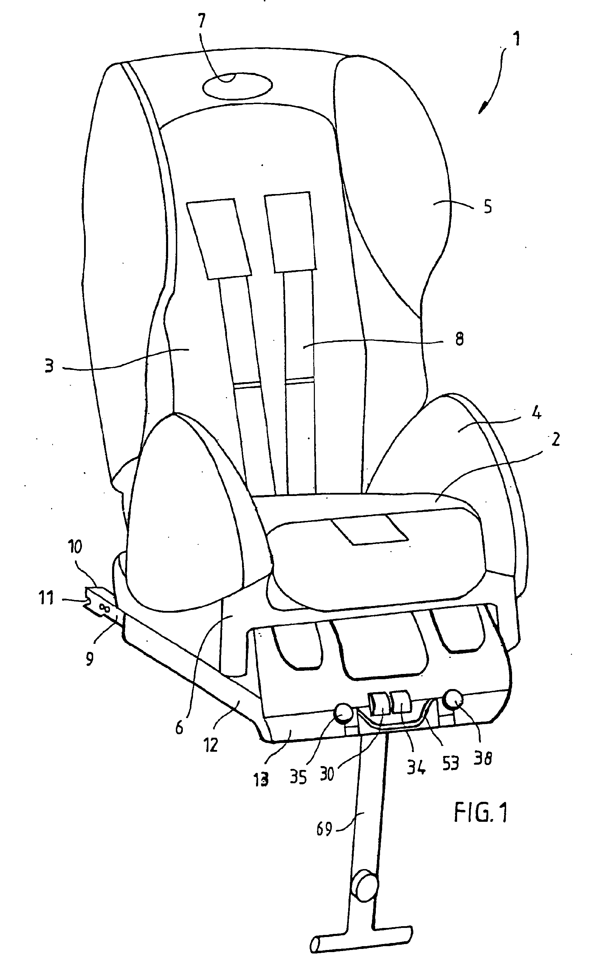

Der Kindersitz 1 aus Fig. 1 umfaßt eine Sitzfläche 2, eine Rückenlehne 3, Armlehnen 4 sowie seitliche Kopf- und Schulterstützen 5. Es gibt eine in sich starre Außenschale 6, an welcher die Armlehnen 4 sowie die seitlichen Kopf- und Schulterstützen 5 fixiert sind; an dieser ist die eigentliche Sitzfläche 2 und die eigentliche Rückenlehne 3 beweglich angeordnet, derart, dass deren Neigung gegenüber der Außenschale 6 verstellbar ist. Im Bereich der Oberkante der Rückenlehne gibt es eine durchgreifbare Öffnung 7, um die Handhabung des Kindersitzes 1 zu erleichtern.

Der Kindersitz 1 verfügt über ein eigenes Gurtsystem 8, bspw. einen 3- oder 5-Punkt-Gurt. Außerdem gibt es an der Rückseite eine nicht dargestellte Einrichtung zur Fixierung an einem fahrzeugeigenen Gurt, insbesondere durch Festklemmen.

Zur Fixierung in einem Fahrzeug mit sog. ISOFIX-Rastbügeln befinden sich - bei der in Fig. 1 wiedergegebenen Konstellation - an der Rückseite des Kindersitzes 1 zwei Rastarme 9, von denen in Fig. 1 nur einer zu sehen ist. Jeder dieser Rastarme 9 hat an seinem freien Ende 10 einen Schlitz 11 und ein hakenförmiges Element, welches einen in diesen Schlitz 11 eingeführten, fahrzeugeigenen ISOFIX-Rastbügel hintergreift und den Kindersitz 1 dadurch an der Fahrzeugstruktur verankert.

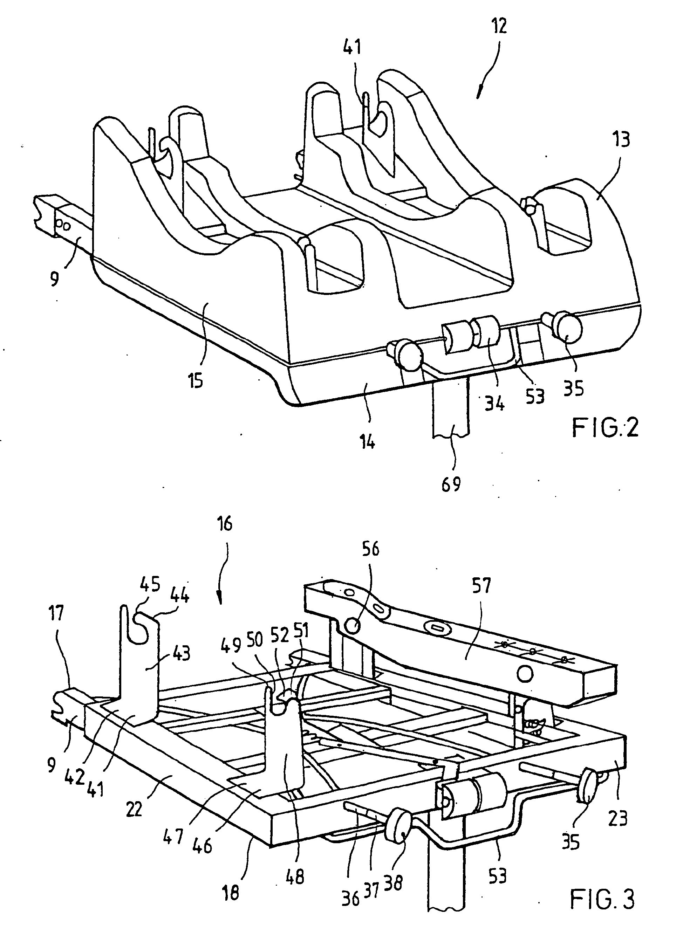

Wie Fig. 2 erkennen läßt, sind die Rastarme 9 jedoch nicht an der Außenschale 6 des Kindersitzes 1 selbst angeordnet, sondern an einem davon lösbaren Teil 12.

Bei diesem Teil 12 handelt es sich um einen Untersatz mit einem zweischaligen Gehäuse 13, bestehend aus einer unteren Halbschale 14 und einer oberen Halbschale 15.

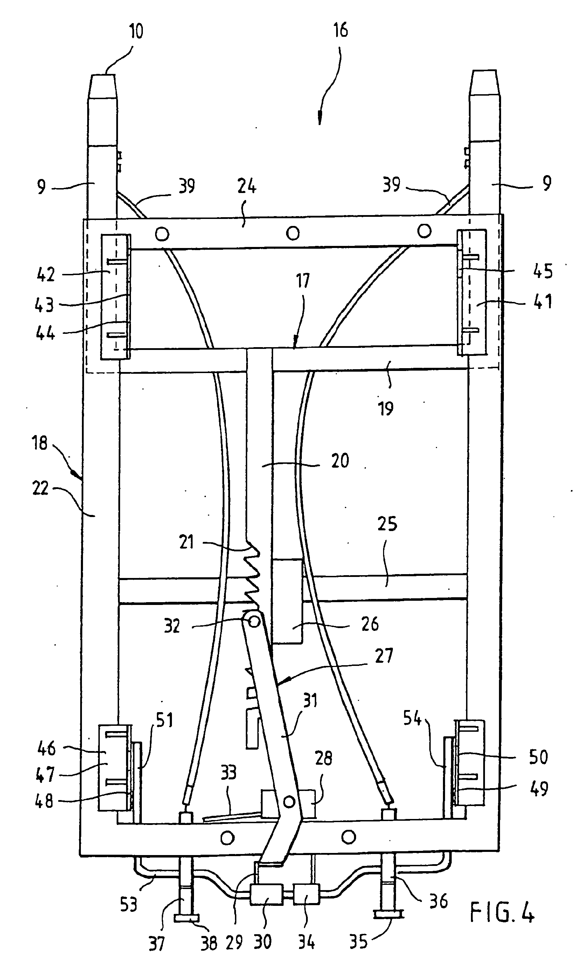

Das Innenleben dieses Gehäuses 13 ist in Fig. 3 in einer perspektivischen Ansicht und in Fig. 4 in einer Draufsicht wiedergegeben. Hauptbestandteil ist eine rahmenförmige Konstruktion 16 aus Metall. Diese rahmenförmige Konstruktion 16 besteht aus zwei Rahmenteilen 17, 18.

Die an den fahrzeugeigenen ISOFIX-Rastbügeln festlegbaren Rastarme 9 bilden die Seitenholme eines ersten, fahrzeugfesten Rahmenteils 17. Durch einen Mittelsteg 19, der diese beiden Rastarme/Seitenholme 9 in deren vorderen, dem rückwärtigen, freien Ende 10 gegenüberliegenden Bereich miteinander verbindet, erhält der fahrzeugfeste Rahmenteil 17 eine etwa U-förmige Struktur. Von diesem Mittelsteg 19 aus erstreckt sich eine Steuerstange 20 entgegen der Richtung der Rastarme/Seitenschenkel 9 nach vorne und ist aus Gründen, die später noch erläutert werden, an einer Längsseite mit Einschnitten 21 versehen, die jeweils eine etwa sägezahnförmige Grundfläche haben. Alle Elemente (Rastarme/Seitenschenkel 9, Mittelsteg 19 und Steuerstange 20 erstrecken sich innerhalb einer gemeinsamen Ebene.

Die tragenden Elemente des anderen Rahmenteils 18 liegen ebenfalls in einer Ebene, und zwar in der Ebene des fahrzeugfesten Rahmenteils 17. Das Rahmenteil 18 hat eine rechteckförmige Struktur mit zwei Längsholmen 22, welche parallel bzw. etwa koaxial zu den Rastarmen/Seitenschenkeln 9 des fahrzeugfesten Rahmenteils 17 verlaufen, und mit drei Verbindungsstreben zwischen diesen Längsholmen 22: Einer vorderen Verbindungsstrebe 23, einer rückwärtigen Verbindungsstrebe 24 und einer Verbindungsstrebe 25 etwa in der Mitte zwischen den beiden erstgenannten Verbindungsstreben 23, 24 oder etwas zur vorderen Verbindungsstrebe 23 hin verlagert, so dass die Längsholme 22 von der mittleren Verbindungsstrebe 25 in je einen vorderen und einen hinteren Abschnitt unterteilt werden, wobei der vordere Abschnitt etwa halb so lang ist wie der hintere.

Die beiden Längsholme 22 bestehen aus je einem Profil mit U-förmigem Querschnitt, wobei die offenen Längsseiten dieser Längsholme 22 einander zugewandt sind. Die Länge der diese beiden Längsholme 22 miteinander verbindenden Streben 23, 24, 25 entspricht etwa der Breite des fahrzeugfesten Rahmenteils 17 zwischen den Außenseiten der Seitenschenkel 9. Gleichzeitig ist der Querschnitt der etwa nutförmigen Ausnehmungen in den Längsseiten der U-Profile 22 etwas größer gewählt als der Außenquerschnitt der Seitenschenkel 9 des fahrzeugfesten Rahmenteils 17. Dadurch nehmen die beiden Längsholme 22 des zweiten Rahmenteils 18 die Seitenschenkel 9 des fahrzeugfesten Rahmenteils 17 auf und bilden eine Art Linearführung für das fahrzeugfeste Rahmenteil 17, welches daher in Richtung der Rastarme 9 gegenüber dem zweiten Rahmenteil 18 verfahrbar ist.

Dabei kreuzt die Steuerstange 20 die mittlere Verbindungsstrebe 25 und liegt an dieser an. Die Steuerstange 20 kann sich dabei ferner an einer Führungsplatte 26 abstützen, die an der mittleren Verbindungsstrebe 25 angeschweißt ist und direkt in der Ebene der Steuerstange 20 liegt. Die Steuerstange 20 liegt mit ihrer den Einschnitten 21 gegenüberliegenden Längsseite an der Führungsplatte 26 an und wird durch einen Hebel 27 an diese gepreßt.

Der Hebel 27 ist an der vorderen Verbindungsstrebe 23 bzw. an einem daran festgeschweißten, sich vorzugsweise innerhalb des Rechteckrahmens erstreckenden Metallwinkel 28 angelenkt, um eine lotrecht zu der Rahmenebene verlaufende Achse verschwenkbar. Bei dem Hebel 27 handelt es sich um einen doppelarmigen Hebel; ein Hebelabschnitt 29 erstreckt sich über die Vorderseite des Rahmenteils 18 hinaus und ist an seinem freien Ende als Betätigungsgriff 30 ausgebildet; der andere Hebelabschnitt 31 ist aus zwei zueinander parallelen, um etwa die Stärke der Steuerstange 20 voneinander beabstandete Flacheisen gebildet, die an ihrem freien Ende durch einen Stift 32 mit einem vorzugsweise runden Querschnitt miteinander verbunden sind. Der Durchmesser dieses Stiftes 32 ist kleiner als die Länge eines Sägezahns bzw. die Länge des Einschnittes 21 zwischen zwei benachbarten Sägezähnen.

Eine Feder 33, welche sich im Bereich der Anlenkung des Hebels 27 an dem Metallwinkel 28 befindet und sich an dem Hebel 27 einerseits und an der vorderen Verbindungsstrebe 23 andererseits abstützt, ist beständig bestrebt, den Hebel 27 derart zu drehen, dass der Stift 32 an dem rückwärtigen Hebelabschnitt 31 die Steuerstange 20 gegen die Führungsplatte 26 preßt. Dabei rutscht der Stift 32 in den nächstgelegenen Einschnitt 21 der Steuerstange 20.

Da die vordere Flanke jedes Einschnitts 21 etwa quer zu der Steuerstange 20 bzw. parallel zu den Verbindungsstreben 23-25 verläuft, kann der fahrzeugfeste Rahmenteil 17 in diesem eingerasteten Zustand nicht an der Rückseite des anderen Rahmenteils 18 herausgezogen werden. Das Zusammenschieben dieser beiden Rahmenteile 17, 18 wird allerdings dadurch ermöglicht, dass die rückwärtige Flanke jedes Einschnittes 21 - in Richtung vom Grund des betreffenden Einschnitts 21 zu dessen Öffnung hin gesehen - von der jeweils vorderen Flanke divergiert bzw. nach hinten zurückweicht. Werden die Rahmenteile 17, 18 zusammengeschoben, so gleitet daher der Stift 32 des Hebels 27 an der rückwärtigen, geneigten Flanke entlang und entfernt sich dabei von der Führungsplatte 26, bis die Spitze des betreffenden Sägezahns überwunden ist und der Stift 32 sodann in den benachbarten Einschnitt 21 gleitet.

Ein Auseinanderziehen der beiden Rahmenteile 17, 18 ist nur möglich, wenn mittels des Betätigungsgriffs 30 der Hebel 27 entgegen der Kraft der Feder 33 so weit verschwenkt wird, dass der Stift 32 vollständig aus dem Bereich der Einschnitte 21 herausgehoben wird und die freie Bewegung der Steuerstange 20 nicht hemmt. Seitlich neben dem Betätigungsgriff 30 befindet sich ein an der vorderen Vebindungsstrebe 23 angeschweißter Griff 34, so dass durch Zusammendrücken der beiden Griffe 30, 34 der Hebel 27 in die Löseposition verschwenkt wird.

Wiederum seitlich zu beiden Seiten der Griffe 30, 34 befindet sich an der Vorderseite der vorderen Verbindungsstrebe 23 je ein weiteres Betätigungselement 35, bestehend aus einer Muffe 36 und einem darin linearbeweglich geführten Schaft 37 mit einer knaufartigen Erweiterung 38 am vorderen Ende. Die Muffe 36 ist mit dem Mantel je eines Bowdenzugs 39 verbunden, deren drahtförmiger Kern an dem Schaft 37 mit der knaufartigen Erweiterung 38 angeschlossen ist. Jeder Bowdenzug 39 führt zu je einem in der Zeichnung nicht dargestellten Schnappmechanismus am rückwärtigen Ende jedes Rastarms 9. Durch ziehen an einem Knauf 38 wird der betreffende Schnappmechanismus in einen gelösten, aber vorgespannten Zustand verbracht, wobei ein Hakenelement des Schnappmechanismus den betreffenden ISOFIX-Rastbügel freigibt. Durch abermaliges Einführen des Rastbügels in den Schlitz 11 am Ende 10 des Rastarms 9 wird der Schnappmechanismus wieder ausgelöst und umgreift dann abermals den ISOFIX-Rastbügel. Die Länge der Bowdenzüge 39 ist derart bemessen, dass die beiden Rahmenteile 17, 18 maximal auseinandergezogen werden können und der Stift 32 auch in den vordersten Einschnitt 21 an der Steuerstange 20 einrasten kann.

Der zweite Rahmenteil 18 ist an der Unterseite 40 der Außenschale 6 des Kindersitzes 1 festlegbar. Zu diesem Zweck sind an der Oberseite beider Längsholme 22 je zwei Verbindungspunkte vorgesehen, je einer im Bereich des vorderen Holmendes und einer im Bereich des rückwärtigen Holmendes.

Wie Fig. 3 erkennen läßt, bestehen die jeweils rückwärtigen Verbindungselemente aus je einem Blechwinkel 41, dessen horizontaler Schenkel 42 an der Oberseite eines Längsholms 22 flach angeschweißt ist, während sich der andere Schenkel 43 etwa vertikal nach oben erstreckt. An der freien Oberkante 44 des vertikalen Schenkels 43 ist ein Einschnitt 45 vorgesehen, gebildet aus einer L-förmigen Ausstanzung des Blechwinkels 41. Die Mündung dieses L-förmigen Einschnitts 45 befindet sich im rückwärtigen Bereich der Oberkante 44 eines Blechwinkels 41, während sich der demgegenüber abgewinkelte Bereich des Einschnitts 41 unterhalb der Oberkante 44 nach vorne erstreckt.

An den beiden vorderen Verbindungspunkten ist ebenfalls je ein Blechwinkel 46 vorgesehen, dessen horizontaler Schenkel 47 an der Oberseite eines Längsholms 22 flach angeschweißt ist, während sich sein anderer Schenkel 48 etwa vertikal nach oben erstreckt. An der freien Oberkante 49 des vertikalen Schenkels 48 ist ein schlitzförmiger Einschnitt 50 vorgesehen mit zueinander parallelen, etwa vertikalen Flanken.

An den einander zugewandten Innenseiten der vertikalen Schenkel 48 beider Blechwinkel 46 ist je ein hakenförmiges Element 51 um eine lotrecht zu dem betreffenden Schenkel 48 verlaufende Achse derart verschwenkbar angelenkt, dass die Hakennase 52 je nach Drehstellung des hakenförmigen Elements 51 in den Schlitz 50 eingreift oder nicht. Durch je eine Feder werden die hakenförmigen Elemente 51 in eine eingeschwenkte Stellung bewegt, insbesondere gezogen.

Aus dieser Position können sie nur manuell herausbewegt werden mittels eines Bügels 53, der sich zwischen den beiden hakenförmigen Elementen 51 erstreckt.

Der Bügel 53 ist etwa U-förmig gebogen. Seine beiden Seitenschenkel 54 sind mit je einem hakenförmigen Elementen 51 verbunden, insbesondere verschweißt. Der Mittelsteg 55 des Bügels 53 erstreckt sich bis vor die Vorderseite der vorderen Verbindungsstrebe 23 und ist daher leicht erreichbar.

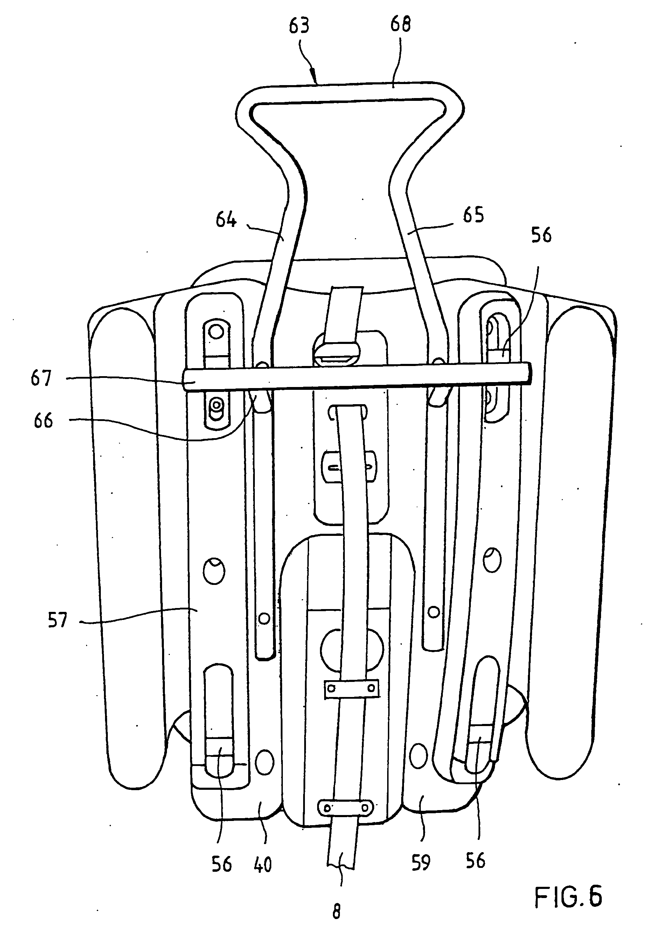

Wie man insbesondere den Fig. 3 und 6 entnehmen kann, bestehen die Pendants zu den Verbindungselementen 41, 46 aus kurzen Rohren oder Stäben 56, deren Längsachsen etwa quer zur Fahrtrichtung verlaufen bzw. lotrecht zu den vertikalen Schenkeln 43, 48 der Verbindungselemente 41, 46. Der Außendurchmesser dieser Rohre oder Stäbe 56 entspricht etwa der Breite der Einschnitte 45, 50 oder ist geringfügig kleiner. Standardmäßig sind zwei solche Rohre oder Stäbe 56 an einem Träger 57 zusammengefaßt. Bei einem solchen Träger 57 handelt es sich bspw. um ein längliches, zu einem Längsholm 22 des kindersitzfesten Rahmenteils 18 paralleles Kunststoffteil, in das die Rohre oder Stäbe 56 derart eingespritzt sind, dass deren Mittelabschnitte innerhalb einer unterseitigen Ausnehmung des Trägers 57 freiliegen und daher von den Verbindungselementen 41, 46 vollständig umgriffen werden können.

Damit sich die Rohre oder Stäbe 56 aus dem betreffenden Träger 57 auch unter Einwirkung großer Kräfte nicht lösen können, sind ihre eingespritzten Endbereiche in je eine von zwei miteinander fluchtenden Durchsteckausnehmungen in den Seitenschenkeln eines U-förmig gebogenen Metallblechs eingesteckt. Der flache Mittelsteg eines solchen Metallblechs ist ebenfalls durchbohrt, damit ein oder mehrere Befestigungsschrauben 58 hindurchsteckbar sind. Der Träger 57 ist entsprechend durchbohrt oder ausgenommen, so dass er von solchermaßen eingesteckten Schrauben 58 vollständig durchgriffen wird.

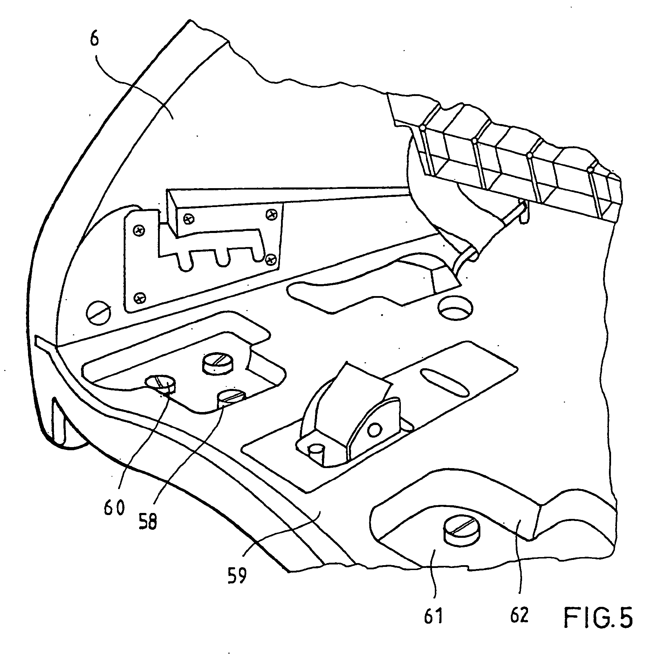

Wie man Fig. 5 entnehmen kann, wird auch das Unterteil 59 der Außenschale 6 des eigentlichen Kindersitzes 1 von derartigen Schrauben 58 vollständig durchdrungen. Deren Köpfe 60 liegen auf der Oberseite von Metallplatten 61 auf, welche in je einer Vertiefung 62 an der Innenseite der Außenschale 6 eingelegt sind. Die ober- und unterseitigen Metalleinlagen an dem eigentlichen Kindersitz 1 einerseits und an einem Träger 57 andererseits werden solchenfalls formschlüssig über- bzw. untergriffen, und zwar von den Schraubenköpfen 60 einerseits und von aufgeschraubten Muttern oder sonstigen Gewindeelementen andererseits. Dadurch werden Kräfte, insbesondere Zugkräfte, jeweils großflächig verteilt.

In den meisten Staaten wird der Kindersitz 1 parallel zur Fahrtrichtung verwendet, so dass die Außenschale 6 des Kindersitzes 1 im Bereich ihrer Rückenlehne 3 an dem Rückenpolster des Fahrzeugsitzes anliegt. In einigen Staaten, bspw. in Schweden, ist jedoch vorgeschrieben, dass der Kindersitz 1 entgegen der Fahrtrichtung einzubauen ist. Hierfür dient ein bügelförmiger Adapter, der in Fig. 6 dargestellt ist.

Dieser Adapter 63 weist eine etwa U-förmig gebogene Stange 64 auf, deren beide Seitenschenkel 65 an der Unterseite des eigentlichen Kindersitzes 1 festgeschraubt werden, insbesondere mittels die zur Festlegung der Träger 57 verwendeten Metallplatten 61 durchgreifender Schrauben 58. An der Unterseite der U-förmig gebogenen Stange 64 ist über etwa vertikale Abstandselemente 66 eine quer zur Fahrtrichtung verlaufende Stange 67 befestigt, bspw. angeschweißt. Diese Stange 67 wird bei Verwendung des Adapters 63 an den hinteren Verbindungselementen 61 verankert, insbesondere in die L-förmigen Einschnitte 45 eingehängt. Dadurch erhält der Kindersitz 1 eine Neigung entgegen der Fahrtrichtung, welche einem Kind ein bequemes Sitzen ermöglicht. Darüber hinaus steht der Mittelsteg 68 der U-förmig gebogenen Stange 64 über die dann nach hinten gewandte Vorderkante der Sitzfläche des Kindersitzes 1 über, bspw. um 8 bis 25 cm, insbesondere um 12 bis 20 cm. Indem dieser Mittelsteg 68 beim Einbau des Kindersitzes 1 sich an dem Lehnenpolster des Fahrzeugsitzes abstützt, wird ein Freiraum insbesondere auch in horizontaler Richtung geschaffen, in dem die Beine eines sitzenden Kindes Platz finden.

An der Vorderseite des kindersitzfesten Rahmens 18, insbesondere an der Unterseite der vorderen Verbindungsstrebe 23, ist ein gegenüber der Rahmenebene etwa lotrecht bzw. vertikal nach unten ragender Stützfuß 69 angeordnet, der sich auf dem Boden eines Fahrzeugs abstützt und daher eine Nickbewegung des Kindersitzes 1 ausschließt. Zur Anpassung an unterschiedliche Fahrzeugtypen kann die Länge dieses Stützfußes 69 verstellbar sein, bspw. teleskopisch ausziehbar und in unterschiedlichen Relativpositionen arretierbar.

## Patentansprüche

1. Kindersitz (1, 6) zum Transport eines Kindes in einem Fahrzeug vorzugsweise in aufrecht sitzender Position, mit einer Einrichtung (12) zur Festlegung des Kindersitzes (1, 6) an dafür vorgesehenen Rastbügeln, welche sich zwischen der Lehne und der Sitzfläche eines fahrzeugeigenen Sitzes befinden und mit der Struktur des betreffenden Fahrzeugs verbunden sind, insbesondere gemäß dem sog. ISOFIX-System, wobei die Einrichtung (12) zur Festlegung des Kindersitzes (1, 6) an den Rastbügeln eines Fahrzeugs von dem Kindersitz (1, 6) lösbar ist und wenigstens zwei gegeneinander verstellbare Rahmenteile (17, 18) aufweist, wobei sich an einem Rahmenteil ein oder mehrere Elemente (11) zum Anschluß an den Rastbügeln eines Fahrzeugs (fahrzeugfestes Rahmenteil 17), befinden, während an dem anderen ein oder mehrere Elemente (41, 46) zum Anschluß an den Kindersitz (6) vorgesehen sind (kindersitzfestes Rahmenteil 18), und wobei an der Sitzunterseite (40, 59) oder an einem daran festlegbaren Element (57, 63) wenigstens ein quer zur Fahrtrichtung verlaufendes, vorzugsweise stabförmiges Element (56, 67) vorgesehen ist, **dadurch gekennzeichnet, dass**
a) an dem kindersitzfesten Rahmenteil (18) ein oder mehrere hakenförmige Elemente (45, 51) vorgesehen sind, welche je eines der stabförmigen Elemente (56, 67) an der Sitzunterseite (40, 59) umgreifen, wovon ein oder mehrere, vorzugsweise zwei hakenförmige Elemente (45) starr mit dem feststehenden Rahmenteil (18) verbunden sind,
b) wobei zwischen dem fahrzeugfesten Rahmentei (17) und dem kindersitzfesten Rahmenteil (18) eine Verstetimechanik mit einem Rastmechanismus vorgesehen ist.

2. Kindersitz nach Anspruch 1, **dadurch gekennzeichnet, dass** die Einrichtung (12) zur Festlegung des Kindersitzes (1, 6) an dafür vorgesehenen Rastbügein eines Fahrzeugs, insbesondere der fahrzeugfeste Rahmenteil (17) desselben, zwei oder mehr Rastarme (9) aufweist, an deren freien Enden (10) sich je ein quer zur Fahrtrichtung verlaufender Schlitz (11) befindet, in dem je ein hakenförmiges Element verstellbar angeordnet ist.

3. Kindersitz nach Anspruch 2, **dadurch gekennzeichnet, dass** das/die hakenförmige(n) Element(e) mit einem Schnappmechanismus versehen ist/sind, der beim Einführen eines fahrzeugeigenen Rastbügels in einen Schlitz (11) eines Rastarms (9) das dortige, hakenförmige Element in eine Schließstellung bewegt und dort arretiert.

4. Kindersitz nach Anspruch 3, dadurch gekennzeichinet, dass der Schnappmechanismus des/der hakenförmigen Elements (-e) mittels (je) einem Bowdenzug (39) in eine gelöste, aber vorgespannte Stellung verbringbar ist.

5. Kindersitz nach einem der vorhergehenden Ansprüche, **dadurch gekennzeichnet, dass** das fahrzeugfeste Rahmenteil (17) in oder an dem kindersitzfesten Rahmenteil (18) geführt ist.

6. Kindersitz nach Anspruch 1, dadurch gekenntzeichnet, dass der Rastmechanismus mittels eines Betätigungselements (30) lösbar ist.

7. Kindersitz nach einem der vorhergehenden Ansprüche, **dadurch gekennzeichnet, dass** der kindersitzfeste Rahmenteil (18) mit der Unterseite (40, 59) des Kindersitzes (6) verbindbar ist.

8. Kindersitz nach einem der vorhergehenden Ansprüche, **dadurch gekennzeichnet, dass** ein oder mehrere, vorzugsweise zwei hakenförmige Elemente (51) verschwenkbar mit dem kindersitzfesten Rahmenteil (18) verbunden sind.

9. Kindersitz nach Anspruch 8, **dadurch gekennzeichnet, dass** das/die verschwenkbare(n), hakenförmige(n) Element(e) (51) durch (je) eine Feder in die Schließstellung gedrückt oder gezogen wird/werden, in der es/sie je ein stabförmiges Element (56) umgreifen.

10. Kindersitz nach einem der Ansprüche 8 oder 9, **dadurch gekennzeichnet, dass** das/die verschwenkbare(n), hakenförmige(n) Element(e) (51) durch ein Betätigungselement (53) in eine Öffnungsstellung bewegbar ist/sind, in der es/sie das betreffende, stabförmige Element (56) nicht umgreift (-en).

11. Kindersitz nach einem der vorhergehenden Ansprüche, **dadurch gekennzeichnet, dass** an der die Einrichtung (12) zur Festlegung des Kindersitzes (1, 6) an den Rastbügeln eines Fahrzeugs, insbesondere an dem kindersitzfesten Rahmenteil (18), eine Bodenstütze (69) angeordnet ist.

## Claims

1. Child seat (1, 6) for transporting a child in a vehicle, preferably in an upright sitting position, having a device (12) for securing the child seat (1, 6) on latching brackets which are provided therefor, which are located between the backrest and the seat surface of a vehicle seat and are connected to the structure of the relevant vehicle, in particular by the so-called ISOFIX system, wherein the device (12) for securing the child seat (1, 6) on the latching brackets of a vehicle can be released from the child seat (1, 6) and has at least two frame parts (17, 18) which can be adjusted in relation to one another, wherein one or more elements (11) are located on one frame part (vehicle-mounted frame part 17) for connection to the latching brackets of a vehicle, while one or more elements (41, 46) are provided on the other frame part (child-seat-mounted frame part 18) for connection to the child seat (6), and wherein at least one preferably bar-like element (56, 67), running transversely to the direction of travel, is provided on the seat underside (40, 59) or on an element (57, 63) which can be secured thereon, **characterized in that**
a) the child-seat-mounted frame part (18) has provided on it one or more hook-like elements (45, 51) each of which engages around in each case one of the bar-like elements (56, 67) on the seat underside (40, 59), one or more of said, preferably two, hook-like elements (45) being rigidly connected to the fixed frame part (18),
b) a mechanical adjusting means with a latching mechanism is provided between the vehicle-mounted frame part (17) and the child-seat-mounted frame part (18).

2. Child seat according to Claim 1, **characterized in that** the device (12) for securing the child seat (1, 6) on latching brackets of a vehicle, which are provided therefor, in particular the vehicle-mounted frame part (17) of said device, has two or more latching arms (9), at the free ends (10) of which in each case one slot (11) is located, which runs transversely to the direction of travel and in which in each case one hook-like element is adjustably arranged.

3. Child seat according to Claim 2, **characterized in that** the hook-like element(s) is/are provided with a snap-fit mechanism which, upon introduction of a latching bracket of a vehicle into a slot (11) of a latching arm (9), moves the respective hook-like element into a closed position and arrests it there.

4. Child seat according to Claim 3, **characterized in that** the snap-fit mechanism of the hook-like element(s) can be shifted into a released but pre-stressed position by means of a (respective) Bowden cable (39).

5. Child seat according to one of the preceding claims, **characterized in that** the vehicle-mounted frame part (17) is guided in or on the child-seat-mounted frame part (18).

6. Child seat according to Claim 1, **characterized in that** the latching mechanism can be released by means of an actuating element (30).

7. Child seat according to one of the preceding claims, **characterized in that** the child-seat-mounted frame part (18) is connectable to the underside (40, 59) of the child seat (6).

8. Child seat according to one of the preceding claims, **characterized in that** one or more, preferably two, hook-like elements (51) are pivotably connected to the child-seat-mounted frame part (18).

9. Child seat according to Claim 8, **characterized in that** the pivotable, hook-like element(s) (51) is/are pushed or pulled by a (respective) spring into the closed position, wherein it/they engage(s) around in each case one bar-like element (56).

10. Child seat according to either of Claims 8 and 9, **characterized in that** the pivotable, hook-like element(s) (51) can be moved by an actuating element (53) into an open position, in which it/they does/do not engage around the relevant bar-like element (56).

11. Child seat according to one of the preceding claims, **characterized in that** a floor support (69) is arranged at the device (12) for securing the child seat (1, 6) on the latching brackets of a vehicle, in particular on the child-seat-mounted frame part (18).

## Revendications

1. Siège pour enfant (1, 6) pour le transport d'un enfant dans un véhicule, de préférence dans une position assise droite, comprenant un dispositif (12) pour fixer le siège pour enfant (1, 6) à des étriers d'encliquetage prévus à cet effet qui se trouvent entre le dossier et la surface d'assise d'un siège propre au véhicule, notamment selon le système dit ISOFIX, le dispositif (12) pour fixer le siège pour enfant (1, 6) aux étriers d'encliquetage d'un véhicule étant détachable du siège pour enfant (1, 6) et présentant au moins deux parties de cadre (17, 18) ajustables l'une par rapport à l'autre, un ou plusieurs éléments (11) pour le raccordement aux étriers d'encliquetage d'un véhicule se trouvant sur une partie de cadre (partie de cadre 17 fixée au véhicule), tandis qu'un ou plusieurs éléments (41, 46) pour le raccordement au siège pour enfant (6) sont prévus sur l'autre partie de cadre (partie de cadre 18 fixée au siège pour enfant), et au moins un élément de préférence en forme de barre (56, 67) s'étendant transversalement à la direction de conduite étant prévu sur le côté inférieur du siège (40, 59) ou sur un élément (57, 63) étant fixable sur celui-ci,
**caractérisé en ce que**
a) un ou plusieurs éléments crochus (45, 51) sont prévus sur la partie de cadre (18) fixée au siège pour enfant, lesquels viennent en prise respectivement autour de l'un des éléments en forme de barre (56, 67) au niveau du côté inférieur du siège (40, 59), dont un ou plusieurs, de préférence deux éléments crochus (45), sont connectés de manière rigide à la partie de cadre (18) fixe,
b) un mécanisme d'ajustage avec un mécanisme d'encliquetage est prévu entre la partie de cadre (17) fixée au véhicule et la partie de cadre (18) fixée au siège pour enfant.

2. Siège pour enfant selon la revendication 1, **caractérisé en ce que** le dispositif (12) pour fixer le siège pour enfant (1, 6) aux étriers d'encliquetage d'un véhicule prévus à cet effet, en particulier la partie de cadre (17) de celui-ci fixée au véhicule, présente deux ou plus de deux bras d'encliquetage (9) aux extrémités libres (10) desquels se trouve respectivement une fente (11) s'étendant transversalement à la direction de conduite, dans laquelle fente (11) est disposé de manière ajustable à chaque fois un élément crochu.

3. Siège pour enfant selon la revendication 2, **caractérisé en ce que** le ou les éléments (crochu) crochus (est pourvu) sont pourvus d'un mécanisme à cliquet qui, lors de l'insertion d'un étrier d'encliquetage propre au véhicule dans une fente (11) d'un bras d'encliquetage (9), déplace l'élément crochu qui s'y trouve dans une position de fermeture et l'y bloque.

4. Siège pour enfant selon la revendication 3, **caractérisé en ce que** le mécanisme à cliquet de l'élément crochu ou des éléments crochus peut être amené au moyen (à chaque fois) d'un câble Bowden (39) dans une position débloquée mais précontrainte.

5. Siège pour enfant selon l'une quelconque des revendications précédentes, **caractérisé en ce que** la partie de cadre (17) fixée au véhicule est guidée dans ou sur la partie de cadre (18) fixée au siège pour enfant.

6. Siège pour enfant selon la revendication 1, **caractérisé en ce que** le mécanisme de cliquet peut être libéré au moyen d'un élément d'actionnement (30).

7. Siège pour enfant selon l'une quelconque des revendications précédentes, **caractérisé en ce que** la partie de cadre (18) fixée au siège pour enfant est connectable au côté inférieur (40, 59) du siège pour enfant (6).

8. Siège pour enfant selon l'une quelconque des revendications précédentes, **caractérisé en ce qu'**un ou plusieurs, de préférence deux éléments crochus (51) sont connectés de manière pivotable à la partie de cadre (18) fixée au siège pour enfant.

9. Siège pour enfant selon la revendication 8, **caractérisé en ce que** le ou les éléments crochus (51) pivotable(s) sont poussés ou tirés par un ressort (respectif) dans la position de fermeture, dans laquelle ils viennent en prise autour d'un élément en forme de barre (56).

10. Siège pour enfant selon l'une quelconque des revendications 8 ou 9, **caractérisé en ce que** le ou les éléments crochus (51) pivotable(s) peut ou peuvent être déplacé(s) par un élément d'actionnement (53) dans une position d'ouverture, dans laquelle ils ne viennent pas en prise autour de l'élément en forme de barre (56) respectif.

11. Siège pour enfant selon l'une quelconque des revendications précédentes, **caractérisé en ce qu'**un support plancher (69) est disposé sur le dispositif (12) pour la fixation du siège pour enfant (1, 6) aux étriers d'encliquetage d'un véhicule, notamment à la partie de cadre (18) fixée au siège pour enfant.
